# EUROPÄISCHE PATENTSCHRIFT

(11) **EP 0 867 996 B1**
(45) Veröffentlichungstag und Bekanntmachung des Hinweises auf die Patenterteilung: **07.05.2003**
(21) Anmeldenummer: 98102467.2
(22) Anmeldetag: 13.02.1998
(51) Int. Cl.: H02G 5/00

(54) **Halter für Stromsammelschienen eines Sammelschienensystems**
Holder for busbars in busbar system
Support pour barres d'un jeu de barres omnibus

(30) Priorität: 25.03.1997 DE 19712363
(43) Veröffentlichungstag der Anmeldung: 30.09.1998
(73) Patentinhaber: Rittal-Werk Rudolf Loh GmbH & Co. KG, 35745 Herborn (DE)
(72) Erfinder: Wagener, Hans, 35716 Dietzhölztal 2 (DE)
(74) Vertreter: Fleck, Hermann-Josef, Dr.-Ing.

(56) Entgegenhaltungen:
- DE-A- 3 013 845
- DE-C- 681 983
- DE-U- 8 804 559

## Beschreibung

Die Erfindung betrifft einen Halter für Stromsammelschienen eines Sammelschienensystems, der auf einer Befestigungsfläche festlegbar ist und eine auf die Breite und Dicke der Stromsammelschiene abgestimmte Aufnahme bildet.

Es sind Halter für Stromsammelschienen eines Sammelschienensystems dieser Art bekannt, bei dem Basisteile mit der Befestigungsfläche verbindbar, in die Aufnahmen für Stromsammelschienen eingeformt sind, welche zu der der Befestigungsfläche abgekehrten Seite hin offen und mittels Abdeckelement verschließbar sind. Dabei sind die Aufnahmen im Basisteil in vorgegebenen Abständen eingebracht und auf die Abmessungen des größten Querschnittes der Stromsammelschienen abgestimmt. In die Aufnahmen sind Einsatzstücke einbringbar, die den Querschnitt der Aufnahmen verringern, um Stromsammelschienen mit kleinerem Querschnitt darin festzulegen.

Diese Ausgestaltung des Halters erfordert nicht nur viele unterschiedliche Bauteile, um Sammelschienen unterschiedlichen Querschnittes in unterschiedlichem Abstand festlegen zu können, bereits verlegte Stromsammelschienen eines Sammelschienensystems lassen sich nachträglich auch nicht auf einfache Weise an weiteren Stellen zusätzlich festlegen.

Ein Halter gemäß dem Oberbegriffs des Anspruchs 1 ist aus DE-U-8 804 559 bekannt.

Es ist Aufgabe der Erfindung, einen Halter für Stromsammelschienen eines Sammelschienensystems der eingangs erwähnten Art so zu gestalten, daß vor allen Dingen auch eine nachträgliche zusätzliche Festlegung bereits auf einer Befestigungsfläche befestigter Stromsammelschienen möglich ist.

Diese Aufgabe wird nach der Erfindung dadurch gelöst, daß der Halter aus zwei L-förmigen Aufnahmeteilen besteht, deren parallel zur Befestigungsfläche ausgerichteten Schenkel die Breite der Aufnahme bestimmten und an ihren einander zugekehrten Stirnseiten mit aufeinander ausgerichteten Schwalbenschwanzstegen und Schwalbenschwanznuten versehen sind, die in Längsrichtung der in die Aufnahme einzubringenden Stromsammelschiene verlaufen, daß die senkrecht zu der Befestigungsfläche gerichteten Schenkel der Aufnahmeteile die Höhe der Aufnahme festlegen und daß die einander zugekehrten Seiten der beiden Aufnahmeteile mit abstehenden und in Längsnuten der in die Aufnahme einzubringenden Stromsammelschiene einführbaren Haltestege versehen sind.

Die beiden Aufnahmeteile können von beiden Seiten an die Stromsammelschiene herangeführt und in Längsrichtung derselben durch die Schwalbenschwanzverbindungen miteinander verbunden werden. Dabei kann die Stromsammelschiene bereits mit Haltern an der Befestigungsfläche angebracht sein und in dem Abstand zu der Befestigungsfläche stehen, der Platz für die mit den Schwalbenschwanzstegen und -nuten versehenen Schenkel der Aufnahmeteile bietet. Die Verwendung von Stromsammelschienen mit Längsnuten hat den Vorteil, daß die Stromsammelschiene auch ohne Abdeckelement in der Aufnahme gehalten ist. Dabei brauchen die Haltestege nicht unbedingt den gesamten Querschnitt der Längsnut in der Stromsammelschiene auszufüllen. Es genügt, wenn die Haltestege in die Längsnut ragen und zumindest den schmäleren Einführabstand einer T-förmig ausgebildeten Längsnut belegen.

Nach einer Ausgestaltung ist daher vorzugsweise vorsehen, daß die Stromsammelschiene mit im wesentlichen quadratischem Außenquerschnitt ausgebildet ist, mittig in allen Außenseiten mit im Querschnitt T-förmigen Längsnuten versehen ist.

Eine Querschnittsvergrößerung der Stromsammelschiene wird in einfacher Weise dadurch erreicht, daß die parallel zu der Befestigungsfläche ausgerichteten Schenkel der Aufnahmeteile auf die Breite von mehreren, aneinanderliegend in die Aufnahme einzubringender Stromsammelschienen ausgelegt sind und/oder daß die senkrecht zur Befestigungsfläche ausgerichteten Schenkel der Aufnahmeteile auf die Höhe mehrerer, übereinander in die Aufnahme einzubringender Stromsammelschienen ausgelegt sind.

Im letzten Fall können die paketierten Stromsammelschienen dadurch in der Aufnahme gehalten werden, daß die einander zugekehrten Seiten der eine Aufnahme begrenzenden Schenkel der Aufnahmeteile pro Stromsammelschiene mit jeweils einem Haltesteg versehen sind.

Es liegt dabei durchaus im Rahmen der Erfindung, den Halt der Stromsammelschienen in den Aufnahmen dadurch zu verbessern, daß die Aufnahmen mittels stegförmigen Abdeckelementen verschließbar sind, die mit den Stirnseiten der senkrecht zur Befestigungsfläche stehenden Schenkel der Aufnahmeteile verschraubbar sind.

Eine einfache Befestigung der Halter auf einer Befestigungsfläche ergibt sich nach einer Ausgestaltung dadurch, daß die der Befestigungsfläche zugekehrten Seiten der Aufnahmeteile mit einem Schwalbenschwanz-Befestigungssteg versehen sind, der in eine Schwalbenschwanz-Befestigungsnut einer Befestigungsschiene einführbar ist. Die Aufnahmeteile lassen sich dann in die Befestigungsschiene einschieben und darin festhalten. Es braucht dann nur noch die Befestigungsschiene mit der Befestigungsfläche verbunden zu werden.

Die Ausrichtung der Befestigungselemente an den Aufnahmeteilen und der Befestigungsschiene kann dabei so gewählt werden, daß die Schwalbenschwanz-Befestigungsstege der Aufnahmeteile und die Schwalbenschwanz-Befestigungsnuten der Befestigungsschiene quer zur Längsrichtung der Stromsammelschienen verlaufen oder daß die Schwalbenschwanz-Befestigungsstege der Aufnahmeteile und die Schwaibenschwenz-Befestigungsnuten der Befestigungsschiene in Längsrichtung der Stromsammelschienen ausgerichtet sind.

Im ersten Fall lassen sich alle Elemente des Halters vorbereitend auf der Befestigungsschiene festlegen, so daß die Stromsammelschienen in ihren Längsrichtungen in die so geschaffenen Aufnahmen eingeschoben werden können. Die zuletzt genannte Ausrichtung eignet sich besonders für eine nachträgliche An-bringung an festverlegten Stromsammelschienen, da die Aufnahmeteile in ihrer Verbindungsvorrichtung längs der Stromsammelschienen auch mit der Befestigungsschiene verbunden werden können.

Die Erfindung wird anhand der in den Zeichnungen dargestellten Ausführungsbeispiele näher erläutert. Es zeigen jeweils in perspektivischer Ansicht:
- Fig. 1: einen Halter für eine einzelne Stromsammelschiene,
- Fig. 2: einen Halter für eine paketierte Stromsammelschiene und
- Fig. 3: eine Anordnung von Haltern für ein dreiphasiges Sammelschienensystem.

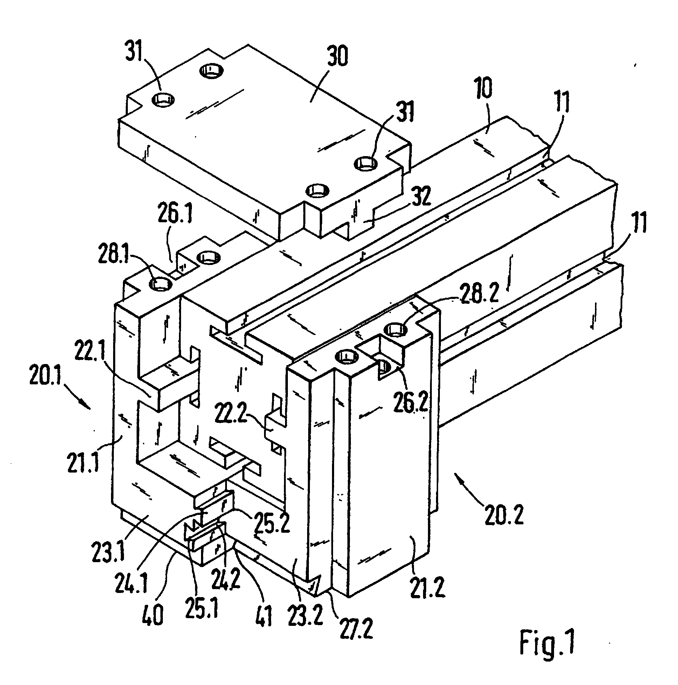

Wie Fig. 1 zeigt, werden bei dem Ausführungsbeispiel Stromsammelschienen 10 mit im wesentlichen quadratischem Außenquerschnitt verwendet, wobei in allen Außenseiten mittig jeweils eine T-Längsnut eingebracht ist. Der Halter umfaßt zwei L-förmige Aufnahmeteile 20.1 und 20.2, wobei die parallel zur Befestigungsfläche ausgerichteten Schenkel 23.1 und 23.2 gegeneinander gerichtet und stirnseitig miteinander verbunden sind. In ihren Abmessungen sind die Schenkel 23.1 und 23.2 auf die halbe Breite der Stromsammelschiene 10 abgestimmt, so daß diese passend in die so gebildete Aufnahme eingebracht werden können. Die Verbindung der beiden Aufnahmeteile 20.1 und 20.2 erfolgt über Schwalbenschwanznuten 25.1 und 25.2 sowie Schwalbenschwanzstege 24.1 und 24.2. Dabei trägt jeder Schenkel 23.1 und 23.2 je einen Schwalbenschwanzsteg 24.1 bzw. 24.2 und eine Schwalbenschwanznut 25.1 bzw. 25.2, die aufeinander so abgestimmt und angeordnet sind, daß zwei Schwalbenschwanzverbindungen entstehen, wenn die beiden Aufnahmeteile 20.1 und 20.2 in Längsrichtung zu der Stromsammelschiene 10 zusammengesteckt werden.

Die senkrecht zu der Befestigungsfläche stehenden Schenkel 21.1 und 21.2 der Aufnahmeteile 20.1 und 20.2 sind auf den einander zugekehrten Seiten mit Haltestegen 22.1 und 22.2 versehen, die in die zugekehrten Längsnuten 11 der Stromsammelschiene 10 eingreifen. Dabei genügt es, wenn die Haltestege 22.1 und 22.2 nur den im Querschnitt schmäleren Einführungsabschnitt der T-förmigen Längsnut 11 der Stromsammelschiene 10 belegen. Dies hat auch den Vorteil, daß die Aufnahemteile 20.1 und 20.2 in Längsrichtung versetzt zu beiden Seiten der Stromsammelschiene 10 herangeführt und mit den Haltestegen 22.1 und 22.2 in die Längsnuten 11 eingeführt werden können, bevor die Aufnahmeteile 20.1 und 20.2 in Längsrichtung der Stromsammelschiene 10 verschoben und miteinander verbunden werden. Dies ist besonders von Vorteil, wenn der Halter auch an einer bereits verlegten und auf einer Befestigungsfläche festgelegten Stromsammelschiene 10 angebracht werden muß.

Die Haltestege 22.1 und 22.2 können auch T-förmigen Querschnitt aufweisen und an den Querschnitt der Längsnuten 11 der Stromsammelschienen 10 angepaßt sein. Diese Ausgestaltung ist dann von Vorzug, wenn die Stromsammelschiene 10 in Längsrichtung in die durch die Aufnahmeteile 20.1 und 20.2 gebildete Aufnahme eingeschoben werden kann.

Die senkrecht zur Befestigungsfläche stehenden Schenkel 21.1 und 21.2 der Aufnahmeteile 20.1 und 20.2 sind auf der Höhe = Breite der Stromsammelschiene 10 abgestimmt. Zum besseren Halt kann die Aufnahme mit einem stegförmigen Abdeckelement 30 verschlossen werden, das mit Ansätzen 32 in Ausnehmungen 26.1 und 26.2 in den Stirnseiten der Schenkel 21.1 und 21.2 eingreift und, wie die Befestigungsaufnahmen 28.1, 28.2 und 31 zeigen, mit den Aufnahmeteilen 20.1 und 20.2 verschraubt wird.

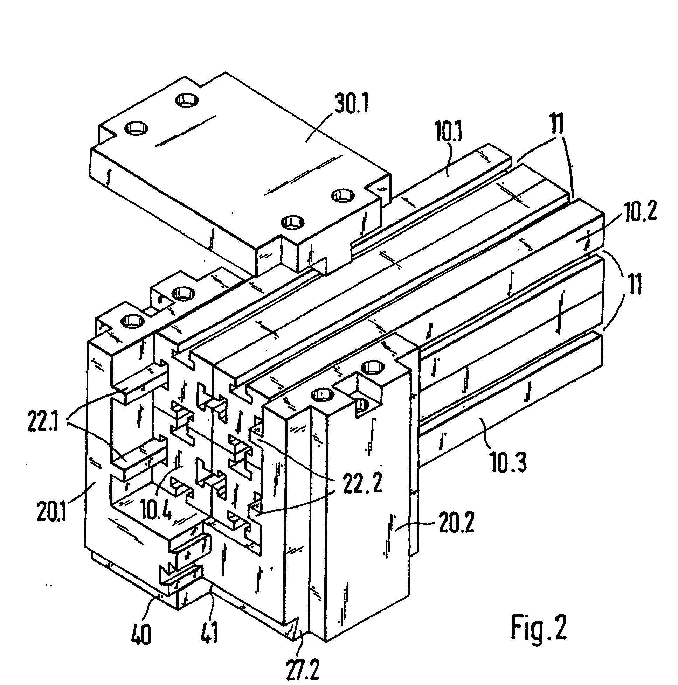

Bei dem Ausführungsbeispiel nach Fig. 2 wird eine aus vier identisch ausgebildeten Stromsammelschienen 10.1, 10.2, 10.3 und 10.4 paketierte Stromsammelschiene in einem Halter festgelegt. Dabei ist die Aufnahme auf die doppelte Breite und Höhe ausgelegt, da zwei Stromsammelschienen 10.1 und 10.2 bzw. 10.3 und 10.4 nebeneinander und zwei derselben Stromsammelschienen 10.1 und 10.4 bzw. 10.2 und 10.3 übereinander angeorndet sind. Die Schenkel der Aufnahmeteile 20.1 und 20.2 sind gegenüber dem Ausführungsbeispiel nach Fig. 1 doppelt so lang. Alle übrigen Teile der Aufnahmeteile 20.1 und 20.2 bleiben unverändert. Das Abdeckelement ist entsprechend verbreitert.

Wie beide Ausführungsbeispiele erkennen lassen, können die Aufnahmeteile 20.1 und 20.2 des Halters auf einer Befestigungsschiene 40 auf einfache Weise befestigt werden. Die der Befestigungsfläche, d.h. der Befestigungsschiene 40, zugekehrten Seiten der Schenkel 23.1 und 23.2 bilden einen Befestigungsschwalbenschwanzsteg 27.1 und 27.2, der quer zur Längsrichtung der Stromsammelschienen 10, 10.1, 10.2, 10.3 und 10.4 verläuft und in eine Befestigungs-Schwalbenschwanznut 41 der Befestigungsschiene 40 eingeschoben werden kann. Diese Ausrichtung ist dann zu bevorzugen, wenn die miteinander verbundenen Aufnahmeteile 20.1 und 20.2 schon vor dem Aufbringen auf der Stromsammelschienen 10, 10.1 bis 10.4 auf der Befestigungsschiene 40 angebracht werden können und die Stromsammelschienen erst danach in die Aufnahmen des Halters eingeschoben werden kann.

Die Ausrichtung der Befestigungs-Schwalbenschwanzverbindungen kann jedoch auch in Längsrichtung der Stromschienen vorgenommen werden, so daß auch nachträglich an einem verlegten Sammelschienensystem weitere Halter leicht angebracht werden können.

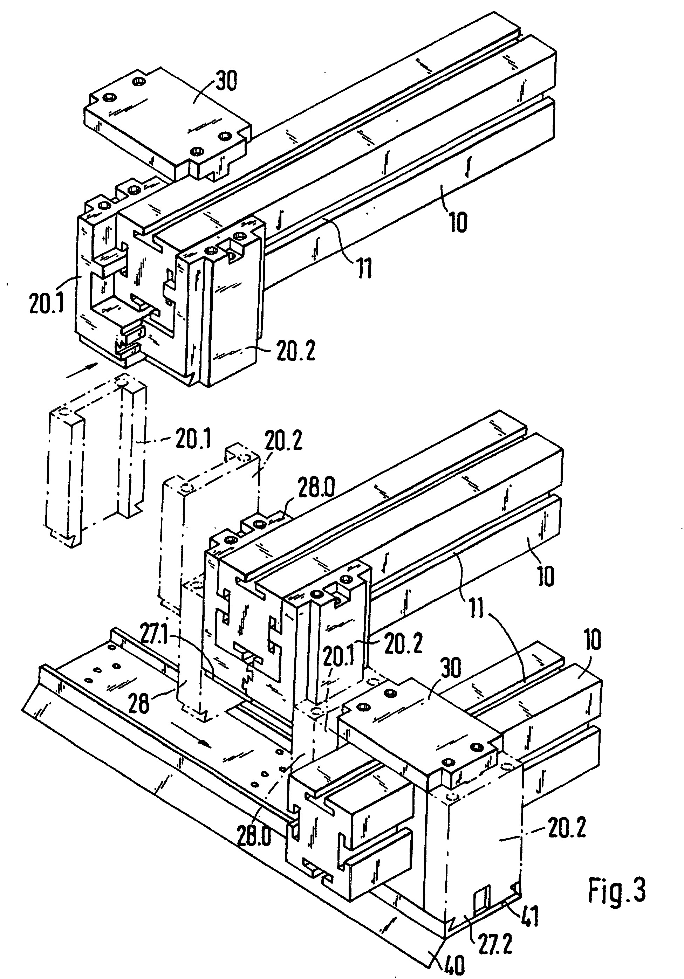

Wie anhand des Ausführungsbeispiels nach Fig. 3 gezeigt wird, können Aufnahmeteile 20.1 und 20.2 nach Fig. 1 auch zum Aufbau eines dreiphasigen Sammelschienensystems verwendet werden. Die Befestigungsschiene 40 nimmt die entsprechende Anzahl von Aufnahmeteilen 20.1 und 20.2 auf, die paarweise die Aufnahmen für die drei Stromsammelschienen 10 bilden. Um den richtigen Abstand der Stromsammelschienen 10 zu erhalten, können zusätzliche Abstandselemente 28.0 verwendet werden, die ebenfalls mit einem Schwalbenschwanzsteg in der Befestigungs-Schwalbenschwanznut 41 der Befestigungsschiene 40 festlegbar sind.

Es bleibt noch zu erwähnen, daß auch zusätzliche Verbindungselemente vorgesehen werden können, die an die Breite der Stromsammelschiene 10 angepaßt sind. Damit können die Aufnahmeteile 20.1 und 20.2 nach Fig. 1 auf die Abmessung für die Aufnahme von paketierten Stromsammelschienen nach Fig. 2 angepaßt werden. Dabei werden die Verbindungsteile an ihren Stirnseiten entsprechend den Stirnseiten der Schenkel 23.1 und 23.2 mit Schwalbenschwanzstegen und Schwalbenschwanznuten versehen, die entsprechend verteilt und angeordnet sind.

## Patentansprüche

1. Halter für Stromsammelschienen eines Sammelschienensystems der auf einer Befestigungsfläche festlegbar ist und eine auf die Breite und Dicke der Stromsammelschiene abgestimmte Aufnahme bildet,
**dadurch gekennzeichnet,**
**daß** der Halter aus zwei L-förmigen Aufnahmeteilen (20.1,20.2) besteht, deren parallel zur Befestigungsfläche ausgerichteten Schenkel (23.1,23.2) die Breite der Aufnahme bestimmten und an ihren einander zugekehrten Stirnseiten mit aufeinander ausgerichteten Schwalbenschwanzstegen (24.1,24.2) und Schwalbenschwanznuten (25.1,25.2) versehen sind, die in Längsrichtung der in die Aufnahme einzubringenden Stromsammelschiene (10) verlaufen,
**daß** die senkrecht zu der Befestigungsfläche gerichteten Schenkel (22.1, 22.2) der Aufnahmeteile (20.1, 20.2) die Höhe der Aufnahme festlegen und
**daß** die einander zugekehrten Seiten der beiden Aufnahmeteile (21.1,21.2) mit abstehenden und in Längsnuten (11) der in die Aufnahme einzubringenden Stromsammelschiene (10) einführbaren Haltestege (22.1,22.2) versehen sind.

2. Halter nach Anspruch 1,
**dadurch gekennzeichnet,**
**daß** die Stromsammelschiene (10) mit im wesentlichen quadratischen Außenquerschnitt ausgebildet ist, mittig in allen Außenseiten mit im Querschnitt T-förmigen Längsnuten (11) versehen ist.

3. Halter nach Anspruch 1 oder 2,
**dadurch gekennzeichnet,**
**daß** die parallel zu der Befestigungsfläche ausgerichteten Schenkel (23.1,23.2) der Aufnahmeteile (20.1,20.2) auf die Breite von mehreren, aneinanderliegend in die Aufnahme einzubringender Stromsammelschienen (10.1 und 10.2; 10.3, 10.4) ausgelegt sind.

4. Halter nach Anspruch 2 oder 3,
**dadurch gekennzeichnet,**
**daß** die senkrecht zur Befestigungsfläche ausgerichteten Schenkel (21.1,21.2) der Aufnahmeteile (20.1,20.2) auf die Höhe mehrerer, übereinander in die Aufnahme einzubringender Stromsammelschienen (10.1 und 10.4, 10.2 und 10.3) ausgelegt sind.

5. Halter nach Anspruch 4,
**dadurch gekennzeichnet,**
**daß** die einander zugekehrten Seiten der eine Aufnahme begrenzenden Schenkel (21.1,21.2) der Aufnahmeteile (20.1,20.2) pro Stromsammelschiene (10.1 und 10.4) mit jeweils einem Haltesteg (22.1 bzw. 22.2) versehen sind.

6. Halter nach einem der Ansprüche 1 bis 5,
**dadurch gekennzeichnet,**
**daß** die Aufnahmen mittels stegförmigen Abdeckelementen (30,30.1) verschließbar sind, die mit den Stirnseiten der senkrecht zur Befestigungsfläche stehenden Schenkel (21.1, 21.2) der Aufnahmeteile (20.1, 20.2) verschraubbar sind.

7. Halter nach einem der Ansprüche 1 bis 6,
**dadurch gekennzeichnet,**
**daß** die der Befestigungsfläche zugekehrten Seiten der Aufnahmeteile (20.1,20.2) mit einem Schwalbenschwanz-Befestigungssteg (27,1, 27.2) versehen sind, der in eine Schwalbenschwanz-Befestigungsnut (41) einer Befestigungsschiene (40) einführbar ist.

8. Halter nach Anspruch 7,
**dadurch gekennzeichnet,**
**daß** die Schwalbenschwanz-Befestigungsstege (27.1,27.2) der Aufnahmeteile (20.1,20.2) und die Schwalbenschwanz-Befestigungsnuten (41) der Befestigungsschiene (40) quer zur Längsrichtung der Stromsammelschienen (10,10.1 bis 10.4) verlaufen.

9. Halter nach Anspruch 7,
**dadurch gekennzeichnet,**
**daß** die Schwalbenschwanz-Befestigungsstege der Aufnahmeteile (20.1,20.2) und die Schwalbenschwanz-Befestigungsnuten der Befestigungsschiene (40) in Längsrichtung der Stromsammelschienen (10,10.1 bis 10.4) ausgerichtet sind.

10. Halter nach einem der Ansprüche 4 bis 9,
**dadurch gekennzeichnet,**
**daß** die in Aufnahmeteilen (20.1,20.2) gehaltenen Stromsammelschienen (10) mittels Abstandselementen (28.0) auf Abstand gehalten sind, wobei die Abstandselemente (28.0) wie die Aufnahmeteile (20.1,20.2) in eine Befestigungsschiene (40) einführbar und darin gehalten sind.

11. Halter nach Anspruch 1,
**dadurch gekennzeichnet,**
**daß** die parallel zur Befestigungsfläche ausgerichteten Schenkel (23.1,23.2) der Aufnahmeteile (20.1,20.2) auf die halbe Breite der Stromsammelschiene (10) mit der kleinsten Breite ausgelegt sind und
**daß** die Stirnseiten dieser Schenkel (23.1,23.2) mittels Verbindungselementen miteinander verbindbar sind, die in ihrer Abmessung auf ganzzahlige Vielfach der Breite der kleinsten Stromsammelschiene (10) abgestimmt sind oder die Breite der Aufnahme auf breitere Stromsammelschienen bringen.

## Claims

1. Holder for busbars of a busbar system, which can be secured on a fastening surface and forms a mount coordinated with the width and thickness of the busbar, **characterized in that** the holder comprises two L-shaped accommodating parts (20.1, 20.2), of which the legs (23.1, 23.2) which are oriented parallel to the fastening surface determine the width of the mount and, on their mutually facing end sides, are provided with aligned dovetail ribs (24.1, 24.2) and dovetail grooves (25.1, 25.2), these running in the longitudinal direction of the busbar (10) which is to be introduced into the mount, **in that** the legs (22.1, 22.2) of the accommodating parts (20.1, 20.2), said legs being directed perpendicularly to the fastening surface, define the height of the mount, and **in that** mutually facing sides of the two accommodating parts (21.1, 21.2) are provided with projecting retaining ribs (22.1, 22.2) which can be introduced into longitudinal grooves (11) of the busbar (10) which is to be introduced into the mount.

2. Holder according to Claim 1, **characterized in that** the busbar (10) is designed with an essentially square outer cross section and is provided centrally, on all the outer sides, with cross-sectionally T-shaped longitudinal grooves (11).

3. Holder according to Claim 1 or 2, **characterized in that** the legs (23.1, 23.2) of the accommodating parts (20.1, 20.2), said legs being oriented parallel to the fastening surface, are set to the width of a plurality of busbars (10.1 and 10.2; 10.3, 10.4) which are to be introduced in abutment into the mount.

4. Holder according to Claim 2 or 3, **characterized in that** the legs (21.1, 21.2) of the accommodating parts (20.1, 20.2), said legs being oriented perpendicularly to the fastening surface, are set to the height of a plurality of busbars (10.1 and 10.4, 10.2 and 10.3) which are to be introduced one above the other into the mount.

5. Holder according to Claim 4, **characterized in that** the mutually facing sides of the mount-bounding legs (21.1, 21.2) of the accommodating parts (20.1, 20.2) are each provided with a retaining rib (22.1 and 22.2) for each busbar (10.1 and 10.4, respectively).

6. Holder according to one of Claims 1 to 5, **characterized in that** the mounts can be closed by means of crosspiece-like covering elements (30, 30.1) which can be screwed to the end sides of the legs (21.1, 21.2) of the accommodating parts (20.1, 20.2), said legs being located perpendicularly to the fastening surface.

7. Holder according to one of Claims 1 to 6, **characterized in that** those sides of the accommodating parts (20.1, 20.2) which are directed towards the fastening surface are provided with a dovetail fastening rib (27.1, 27.2), which can be introduced into a dovetail fastening groove (41) of a fastening rail (40).

8. Holder according to Claim 7, **characterized in that** the dovetail fastening ribs (27.1, 27.2) of the accommodating parts (20.1, 20.2) and the dovetail fastening grooves (41) of the fastening rail (40) run transversely to the longitudinal direction of the busbars (10, 10.1 to 10.4).

9. Holder according to Claim 7, **characterized in that** the dovetail fastening ribs of the accommodating parts (20.1, 20.2) and the dovetail fastening grooves of the fastening rail (40) are oriented in the longitudinal direction of the busbars (10, 10.1 to 10.4).

10. Holder according to one of Claims 4 to 9, **characterized in that** the busbars (10) retained in accommodating parts (20.1, 20.2) are spaced apart by means of spacer elements (28.0), which, like the accommodating parts (20.1, 20.2), can be introduced into a fastening rail (40) and retained therein.

11. Holder according to Claim 1, **characterized in that** the legs (23.1, 23.2) of the accommodating parts (20.1, 20.2), said legs being oriented parallel to the fastening surface, are set to half the width of the smallest-width busbar (10), and **in that** the end sides of these legs (23.1, 23.2) can be connected to one another by means of connecting elements which are coordinated, in terms of dimensions, to a whole-numbered multiple of the width of the smallest busbar (10) or adapt the width of the mount to wider busbars.

## Revendications

1. Support pour barres omnibus d'un jeu de barres omnibus, qui peut être fixé sur une surface de fixation et qui forme un logement adapté à la largeur et à l'épaisseur des barres omnibus,
**caractérisé en ce que**
le support se compose de deux parties de logement en forme de L (20.1, 20.2), dont les branches (23.1, 23.2) orientées parallèlement à la face de fixation déterminent la largeur du logement et qui sont pourvues sur leurs faces frontales tournées l'une vers l'autre de nervures en queue d'aronde (24.1, 24.2) et de rainures en queue d'aronde (25.1, 25.2) alignées les unes avec les autres, qui s'étendent dans la direction longitudinale des barres omnibus (10) devant être introduites dans le logement,
les branches (21.1, 21.2) des parties de logement (20.1, 20.2), orientées perpendiculairement à la surface de fixation, définissent la hauteur du logement et
les côtés des deux parties de logement (20.1, 20.2), tournés l'un vers l'autre, sont pourvus de nervures de fixation (22.1, 22.2) saillantes et pouvant être guidées dans des rainures longitudinales (11) des barres omnibus (10) à introduire dans le logement.

2. Support selon la revendication 1,
**caractérisé en ce que**
la barre omnibus (10) est réalisée avec une section transversale extérieure essentiellement quadratique, et est pourvue au milieu de tous ses côtés extérieurs de rainures longitudinales (11) de section transversale en forme de T.

3. Support selon la revendication 1 ou 2,
**caractérisé en ce que**
les branches (23.1, 23.2) des parties de logement (20.1, 20.2), orientées parallèlement à la face de fixation, sont disposées sur la largeur de plusieurs barres omnibus (10.1 et 10.2 ; 10.3, 10.4) devant être introduites les unes contre les autres dans le logement.

4. Support selon la revendication 2 ou 3,
**caractérisé en ce que**
les branches (21.1, 21.2) des parties de logement (20.1, 20.2), orientées perpendiculairement à la surface de fixation, sont disposées sur la hauteur de plusieurs barres omnibus (10.1 et 10.4 , 10.2 et 10.3) devant être introduites les unes au-dessus des autres dans le logement.

5. Support selon la revendication 4,
**caractérisé en ce que**
les côtés tournés l'un vers l'autre des branches (21.1, 21.2) des parties de logement (20.1, 20.2), délimitant un logement, sont pourvus, pour chaque barre omnibus (10.1 et 10.4), d'une nervure de fixation respective (22.1, respectivement 22.2).

6. Support selon l'une quelconque des revendications 1 à 5,
**caractérisé en ce que**
les logements peuvent être fermés au moyen d'éléments de recouvrement en forme d'ailettes (30, 30.1) qui peuvent être vissés aux côtés frontaux des branches (21.1, 21.2) des parties de logement (20.1, 20.2), s'étendant perpendiculairement à la surface de fixation.

7. Support selon l'une quelconque des revendications 1 à 6,
**caractérisé en ce que**
les côtés des parties de logement (20.1, 20.2) tournés vers la surface de fixation sont pourvus d'une nervure de fixation en queue d'aronde (27.1, 27.2), qui peut être guidée dans une rainure de fixation en queue d'aronde (41) d'une barre de fixation (40).

8. Support selon la revendication 7,
**caractérisé en ce que**
les nervures de fixation en queue d'aronde (27.1, 27.2) des parties de logement (20.1, 20.2) et les rainures de fixation en queue d'aronde (41) de la barre de fixation (40) s'étendent transversalement à la direction longitudinale des barres omnibus (10, 10.1 à 10.4).

9. Support selon la revendication 7,
**caractérisé en ce que**
les nervures de fixation en queue d'aronde des parties de logement (20.1, 20.2) et les rainures de fixation en queue d'aronde de la barre de fixation (40) sont orientées dans la direction longitudinale des barres omnibus (10, 10.1 à 10.4).

10. Support selon l'une quelconque des revendications 4 à 9,
**caractérisé en ce que**
les barres omnibus (10) maintenues dans les parties de logement (20.1, 20.2) sont maintenues espacées au moyen d'éléments d'écartement (28.0), les éléments d'écartement (28.0), comme les parties de logement (20.1, 20.2), pouvant être guidés dans un rail de fixation (40) et y étant maintenus.

11. Support selon la revendication 1,
**caractérisé en ce que**
les branches (23.1, 23.2) des parties de logement (20.1, 20.2), orientées parallèlement à la surface de fixation, sont conçues avec la plus petite largeur sur la demi-largeur des barres omnibus (10) et **en ce que** les faces frontales de ces branches (23.1, 23.2) peuvent être connectées l'une à l'autre au moyen d'éléments de connexion dont les dimensions sont adaptées à une pluralité paire de la largeur des plus petites barres omnibus (10) ou qui font correspondre la largeur du logement à des barres omnibus plus larges.
